(19) **Europäisches Patentamt / European Patent Office / Office européen des brevets**

(11) **EP 2 310 249 B1**

(12) # FASCICULE DE BREVET EUROPEEN

(45) Date de publication et mention de la délivrance du brevet:
**01.02.2012 Bulletin 2012/05**

(21) Numéro de dépôt: **09769205.7**

(22) Date de dépôt: **22.06.2009**

(51) Int Cl.:
**B62D 49/00** *(2006.01)*

(86) Numéro de dépôt international:
**PCT/EP2009/057714**

(87) Numéro de publication internationale:
**WO 2009/156356 (30.12.2009 Gazette 2009/53)**

(54) **VEHICULE LOURD DESTINE A TRACTER UN ENGIN.**

ZUM ZIEHEN VON MASCHINEN BESTIMMTES SCHWERFAHRZEUG

HEAVY VEHICLE INTENDED TO DRAW MACHINERY

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **24.06.2008 FR 0854188**

(43) Date de publication de la demande:
**20.04.2011 Bulletin 2011/16**

(73) Titulaires:
• **Société de Technologie Michelin**
  **63000 Clermont-Ferrand (FR)**
• **Michelin Recherche et Technique S.A.**
  **1763 Granges-Paccot (CH)**

(72) Inventeur: **DESSEVRE, Dominique**
**F-63140 Chatel-guyon (FR)**

(74) Mandataire: **Le Cam, Véronique Marie Christine**
**Manufacture Française des**
**Pneumatiques Michelin**
**23 Place des Carmes-Déchaux**
**SGD/LG/PI - F35 - Ladoux**
**63040 Clermont-Ferrand Cedex (FR)**

(56) Documents cités:
**US-A1- 2003 040 403    US-A1- 2005 269 796**
**US-B1- 6 260 873**

**EP 2 310 249 B1**

**Description**

La présente invention concerne un véhicule lourd destiné à tracter un engin tel qu'un tracteur agricole destiné à tracter un outil de travail du sol.

Bien que non limitée à cette application, l'invention sera plus particulièrement décrite en référence à un tracteur agricole.

Il apparaît que dans certaines conditions de roulage, dès lors que l'outil tracté exerce une force non négligeable de résistance à l'avancement, par exemple sous l'effet de la pénétration d'un élément dans le sol dudit outil tel qu'un disque, le tracteur présente des phénomènes de tressautements de type rebonds causant dans un premier temps des problèmes de confort pour le conducteur, et donc une pénibilité accrue du travail du conducteur, et pouvant aller jusqu'à des problèmes d'avancement du tracteur, les durées de contact devenant insuffisantes pour autoriser des frottements nécessaires à l'avancée du tracteur sur le sol, et donc une perte d'efficacité dudit tracteur par dégradation de l'adhérence du pneumatique sur le sol considéré.

Ces phénomènes de tressautements ou sauts se caractérisent par des oscillations intermittentes ou quasi-entretenues de l'ensemble roulant à des fréquences faibles comprises habituellement entre 0,5 et 4 Hz et sont connus sous le nom de « power hop ».

Les solutions actuellement mises en oeuvre par les utilisateurs consistent à alourdir le tracteur et/ou adapter la pression de gonflage des pneumatiques du tracteur de façon empirique ou selon des méthodes pas à pas proposées par les constructeurs de véhicules ou les manufacturiers de pneumatiques. Ces réglages de pression ou de lest du tracteur sont d'une part une perte de temps pour l'utilisateur et en outre ils nuisent aux performances du véhicule puisque les réglages optimaux préconisés ne sont plus respectés. Des pressions trop élevées peuvent par exemple entraîner des compactions plus importantes sur des sols meubles et une résistance à l'avancement plus importante.

Les nombreuses recherches effectuées par la demanderesse portant sur des modifications des pneumatiques et notamment des profils méridiens de la bande de roulement, des profils méridiens d'armature de carcasse, des matériaux d'armatures des carcasse et sommet, des modifications de dessins et dimensions de blocs de sculpture, n'ont pas apporté, à ce jour, les améliorations escomptées, car ces modifications n'agissent pas ou peu sur le phénomène tel que décrit ci-dessus.

Concernant la conception habituelle des pneumatiques d'engin agricole, l'armature de carcasse, ancrée dans chaque bourrelet, est composée d'au moins une couche d'éléments de renforcement textiles et/ou métalliques, les dits éléments étant sensiblement parallèles entre eux dans la couche et pouvant être sensiblement radiaux et/ou franchement croisés d'une nappe à la suivante en faisant avec la direction circonférentielle des angles égaux ou inégaux. L'armature de carcasse est habituellement surmontée d'une armature de sommet composée d'au moins deux couches de sommet de travail d'éléments de renforcement qui peuvent être textiles ou métalliques, mais croisés d'une couche à la suivante en faisant avec la direction circonférentielle des angles faibles. La bande de roulement du pneumatique considéré est formée de blocs de caoutchouc ou barrettes, inclinées par rapport à la direction circonférentielle d'un angle généralement élevé, et généralement séparées circonférentiellement les unes des autres par des creux présentant une largeur (mesurée dans le sens circonférentiel) supérieure à la largeur moyenne des barrettes. Les dites barrettes peuvent être symétriques entre elles par rapport au plan équatorial en étant continues axialement ou, comme dans la majorité des cas, discontinues axialement. Les extrémités de barrettes axialement proches du plan équatorial sont alors dans la plupart des cas décalées circonférentiellement les unes par rapport aux autres, tout en présentant ce qu'il est courant de dénommer un dessin en chevrons.

Dans le brevet FR 1 046 427, la demanderesse a par exemple décrit des armatures de carcasse dans lesquelles les directions des éléments de renforcement de la nappe ou des nappes dans un flanc sont sensiblement symétriques, par rapport au plan équatorial du pneumatique, des directions des éléments de renforcement des dites nappe(s) dans l'autre flanc. Comme montré et explicité, il faut entendre par nappe, soit une nappe continue axialement de bourrelet à bourrelet, soit deux demi-nappes ancrées dans chaque bourrelet à un élément annulaire de renforcement de bourrelet mais dont les extrémités radialement supérieures sont distantes l'une de l'autre et du plan équatorial.

Le brevet US 3 108 628 enseigne encore, en vue de conférer au pneumatique une bonne stabilité sous efforts transversaux, de compléter l'armature de carcasse radiale par des demi-nappes dites de stabilisation et formées d'éléments de renforcement inclinés par rapport à la direction circonférentielle, les dites demi-nappes se chevauchant au sommet sur la plus grande partie de la largeur axiale de la bande de roulement de sorte que les éléments de renforcement se croisent.

Le brevet FR 1 259 199 montre et décrit aussi une armature de carcasse directionnelle composée de deux demi-nappes d'éléments de renforcement inclinés par rapport à la direction circonférentielle de telle sorte qu'elles se chevauchent au sommet du pneumatique pour former une armature croisée.

D'autres documents décrivent des solutions non pneumatiques mais liées au véhicule et/ou à l'outil tracté pour pallier ce problème de tressautements.

Le document US 6,260,873 décrit un dispositif interposé entre un tracteur et un outil tracté pour amortir les tensions pouvant intervenir entre le tracteur et l'outil.

Le document US 20050269796 décrit un système optimisé de suspensions pour tracteur agricole permettant de limiter ce phénomène de power hop.

Les différentes solutions déjà proposées ne permettent pas de garantir une efficacité sur tous les types de sols ou bien ne permettent que d'atténuer plus ou moins pérennement l'amortissement de ces phénomènes de tressautements, au détriment d'autres propriétés recherchées du véhicule.

Dans leurs études, les inventeurs se sont ainsi donnés pour mission d'améliorer le comportement des véhicules lourds tels que des tracteurs destinés à tracter un engin et notamment d'aboutir à des véhicules lourds ne présentant pas ou peu de phénomènes de tressautements ou sauts de type power hop qui se caractérisent par des oscillations quasi-entretenues de l'ensemble roulant à des fréquences faibles comprises entre 0,5 et 4 Hz, quel que soit la nature du terrain sur lequel circule le véhicule lorsqu'il tracte l'engin et sans intervention spécifique sur le véhicule telle qu'une modification des pressions de gonflages ou un lestage particulier du véhicule.

Ce but a été atteint selon l'invention par un véhicule lourd comportant au moins quatre ensembles montés, constitués chacun d'une roue et d'un pneumatique, destiné à tracter un engin, caractérisé en ce que les propriétés du véhicule vérifient la relation :

$$\left(\rho' - \sqrt{\kappa.(1-\kappa)}\right)^2 + \left(\delta - \frac{h'.\mu}{2}\right)^2 > \left(\frac{h'.\mu}{2}\right)^2,$$

avec,

$\rho' = \rho/L$, $\rho$ étant le rayon de giration du véhicule, exprimé en mètre, et L étant l'empattement du véhicule, également exprimé en mètre, c'est-à-dire la distance projetée au sol entre l'essieu avant et l'essieu arrière du véhicule. $\rho'$ s'exprime sans unité. Le rayon de giration $\rho$ se détermine selon la relation $\rho^2 = I_v/m$, $I_v$ étant l'inertie de tangage du véhicule par rapport à un axe transversal (parallèle aux axes des essieux) et passant par le centre de gravité, qui s'exprime en kg.m$^2$ du véhicule, et m étant la masse du véhicule, exprimée en kg.

$\kappa$ exprime la proportion de la rigidité verticale $k_1$ totale sous l'essieu avant par rapport à la somme des rigidités verticales totales ($k_1 + k_2$) sous les essieux avant et arrière du véhicule, $k_1$ et $k_2$ exprimant respectivement les rigidités verticales sous l'essieu avant et sous l'essieu arrière. La rigidité verticale totale sous un essieu est la résultante des rigidités verticales des pneumatiques et des rigidités verticales induites par le sol sous chacun des pneumatiques dudit essieu. La rigidité verticale du pneumatique est la rigidité propre du pneumatique, c'est-à-dire celle mesurée sur un sol plan non déformable.

$\delta$ exprime le rapport entre le décalage du centre de gravité vers l'avant et l'empattement L du véhicule, le décalage du centre de gravité vers l'avant étant défini à partir d'une position du centre de gravité selon laquelle $k_1.L_1 = k_2.L_2$, $L_1$ et $L_2$ exprimant respectivement les distances projetées au sol entre le centre de gravité et l'essieu avant d'une part et l'essieu arrière d'autre part.

$h'$ est le rapport entre la hauteur de la ligne de traction par rapport à un sol formant un plan horizontal, le véhicule et l'engin tracté étant disposés en position de travail sur ledit sol formant un plan horizontal, et l'empattement L du véhicule. Au sens de l'invention, le sol formant un plan horizontal est un sol rigide, ce qui signifie que le véhicule lourd et l'engin tracté ne créent pas d'ornières dans ledit plan lors de la mesure de la hauteur considérée.

$\mu$ est le rapport entre la composante longitudinale de la force de résistance appliquée par l'engin tracté sur le véhicule, et le poids du véhicule.

Comme il ressort de ce qui précède, les paramètres $\rho'$, $\kappa$, $\delta$, $h'$ et $\mu$ sont exprimés sans unité.

Les mesures de ces différentes caractéristiques peuvent être faites selon tous moyens connus de l'homme du métier, y compris par des outils de modélisation.

L'empattement L est par exemple mesurable par projection au sol des axes des essieux. La position longitudinale du centre de gravité du véhicule peut se déduire à partir des mesures de charges par essieu.

La masse m du véhicule est par exemple déterminée par pesée du tracteur complet (châssis et ensembles montés).

L'inertie de tangage Iv peut être évaluée expérimentalement en disposant le tracteur sur un plateau, l'axe transversal du tracteur et l'axe d'oscillation du plateau étant alignés. L'inertie peut aussi être mesurée en procédant comme précédemment sur chacune des sous-parties constituant l'ensemble du tracteur, puis par calcul mathématique (théorème de Huygens). L'inertie de tangage peut encore être quantifiée par calcul numérique, notamment par recours aux outils de calcul assisté par ordinateur (CAO).

Disposant des grandeurs L, m et Iv, le valeur de $\rho'$ s'obtient par calcul comme expliqué plus haut :

$$\rho' = \left( \sqrt{I_V/m} \right) \Big/ L .$$

Le terme $\kappa$ peut être estimé à partir des rigidités totales sous essieux : $\kappa = k1\Big/(k1+k2)$, ki étant la rigidité totale sous l'essieu i avec i = 1 pour l'essieu avant et i = 2 pour l'essieu arrière. ki est la rigidité verticale de l'ensemble composé du pneumatique et du sol sur lequel roule le pneumatique. On désigne par kip la rigidité de l'ensemble des pneumatiques de l'essieu i (les pneumatiques fonctionnant en parallèle, leurs rigidités propres kipj s'ajoutent pour donner kip). La rigidité kipj du pneumatique j de l'essieu i est le rapport entre l'accroissement de charge qu'il porte et la diminution de l'altitude du centre de la roue, le pneumatique reposant sur un sol plan indéformable et horizontal et portant initialement, avec les autres pneumatiques du même essieu i, la charge dudit essieu. La rigidité s'exprime donc usuellement en N/m (Newton par mètre). La rigidité kisj du sol sur lequel roule le pneumatique j de l'essieu i est le rapport entre une augmentation de charge appliquée par ledit pneumatique lors de son passage et la variation de la profondeur d'ornière alors crée. La rigidité kisj s'exprime donc usuellement en N/m elle aussi. Dans le cas du roulage sur un sol meuble, les pneumatiques de l'essieu avant compactent le sol lors de leur passage, de sorte que la rigidité du sol sous l'essieu arrière est augmentée par rapport à celle sous l'essieu avant. De façon pratique, soit on calcule la rigidité totale sous essieu par la formule $ki = \left( \left( \sum_j kipj \right)^{-1} + \left( \sum_j kisj \right)^{-1} \right)^{-1}$ soit on mesure directement le rapport entre la variation de charge appliquée par les pneumatiques sur le sol et la diminution résultante d'altitude de l'axe de l'essieu.

Les inventeurs ont su mettre en évidence que si l'ensemble des caractéristiques du véhicule satisfont la relation ci-dessus énoncée, les apparitions de phénomènes de tressautement ou power hop sont fortement diminuées, voire inexistantes en fonction notamment des terrains sur lesquels circule le véhicule.

Selon un premier mode de réalisation d'un véhicule conforme à l'invention, $\rho'$ vérifie la relation $\rho' > 0.525$. Une telle valeur de $\rho'$ permet effectivement de favoriser la diminution des phénomènes de power hop, ladite valeur de $\rho'$ permettant de satisfaire la relation énoncée ci-dessus. $\rho'$ étant proportionnel au rayon de giration $\rho$ du véhicule, la valeur de $\rho'$ peut être modifiée en fonction de la conception du véhicule et notamment par un choix de répartition des masses des éléments constitutifs du véhicule. Comparé à un véhicule usuel, ce mode de réalisation de l'invention va consister à éloigner les masses constitutives du véhicule du centre de gravité de celui-ci pour augmenter son rayon de giration.

Selon un autre mode de réalisation d'un véhicule conforme à l'invention, $\rho'$ vérifie la relation : $\rho' < 0.395$. Une telle valeur de $\rho'$ permet comme précédemment de favoriser la diminution des phénomènes de power hop, ladite valeur de $\rho'$ permettant de satisfaire la relation énoncée ci-dessus. $\rho'$ étant proportionnel au rayon de giration $\rho$ du véhicule, la valeur de $\rho'$ peut être modifiée en fonction de la conception du véhicule et notamment par un choix de répartition des masses des éléments constitutifs du véhicule. Contrairement au mode de réalisation présenté précédemment, comparé à un véhicule usuel, ce mode de réalisation de l'invention va consister à recentrer dans un plan contenant les directions verticales et d'avancement du véhicule les masses constitutives du véhicule autour du centre de gravité de celui-ci pour diminuer son rayon de giration. Ces masses peuvent par contre être réparties selon la direction transversale du véhicule.

Selon l'un ou l'autre de ces modes de réalisation d'un véhicule conforme à l'invention, la variation de la valeur $\rho'$ permet de modifier le premier élément $\left( \rho' - \sqrt{\kappa.(1-\kappa)} \right)^2$ de la relation ou inéquation présentée ci-dessus et dans les deux cas permet de satisfaire ladite relation.

Une variante avantageuse de l'invention prévoit que la hauteur de flanc des pneumatiques équipant l'essieu arrière du véhicule est inférieure d'au moins 15% à la hauteur de flanc des pneumatiques équipant l'essieu avant du véhicule.

La hauteur du flanc d'un pneumatique a une action directe sur la rigidité du pneumatique lors de son usage avec une pression et une charge donnée dudit pneumatique. Une différence de hauteur de flanc entre les pneumatiques équipant l'essieu arrière du véhicule et les pneumatiques équipant l'essieu avant du véhicule tel que proposée selon cette variante de l'invention va contribuer à modifier la valeur $\delta$ qui est proportionnelle au décalage du centre de gravité vers l'avant, par rapport à une position de référence du centre de gravité selon laquelle $k_1.l_1 = k_2.l_2$. La différence de hauteur de flanc proposée selon cette variante de l'invention conduisant à des hauteurs de flancs des pneumatiques arrières inférieures à celles des pneumatiques avants, la rigidité des pneumatiques arrières est augmentée relativement à celle des pneumatiques avants et donc le centre de gravité est décalé vers l'avant par rapport à la position de référence du centre de gravité, du fait du décalage de ladite position de référence vers l'arrière du véhicule quand les pneumatiques arrières sont rigidifiés relativement aux pneumatiques avants.

La différence de valeur d'au moins 15 % entre les hauteurs de flanc des pneumatiques équipant l'essieu arrière du véhicule et des pneumatiques équipant l'essieu avant du véhicule, les hauteurs de flancs des pneumatiques équipant l'essieu arrière du véhicule étant inférieures, permet de fixer la valeur du deuxième élément $\left( \delta - \dfrac{h'.\mu}{2} \right)^2$ de la relation ou inéquation présentée ci-dessus à un niveau suffisamment élevé pour que ladite inéquation soit vérifiée.

En dessous d'un écart de 15 % entre les hauteurs de flanc des pneumatiques équipant l'essieu arrière du véhicule et des pneumatiques équipant l'essieu avant du véhicule, l'influence sur l'apparition de phénomènes de tressautements est insuffisante.

Dans le cas d'un véhicule équipé de pneumatiques de diamètre extérieur identiques pour les pneumatiques équipant l'essieu arrière du véhicule et pour les pneumatiques équipant l'essieu avant du véhicule, les pneumatiques équipant l'essieu arrière présentent des flancs de hauteur plus faible que celles des pneumatiques équipant l'essieu avant ; lesdits pneumatiques sont donc différents.

Dans le cas d'un véhicule équipé de pneumatiques de diamètres extérieurs différents d'un essieu à l'autre, le diamètre extérieur des pneumatiques équipant l'essieu arrière du véhicule est de préférence inférieur au diamètre extérieur des pneumatiques équipant l'essieu avant du véhicule.

Selon une autre variante de l'invention, la hauteur de flanc des pneumatiques équipant l'essieu arrière du véhicule est supérieure d'au moins 15% à la hauteur de flanc des pneumatiques équipant l'essieu avant du véhicule et la largeur axiale des bandes de roulement des pneumatiques équipant l'essieu avant du véhicule est au moins égale à la largeur axiale des bandes de roulement des pneumatiques équipant l'essieu arrière du véhicule.

La direction axiale ou transversale d'un pneumatique est parallèle à l'axe de rotation dudit pneumatique.

Lorsque le véhicule est équipé de montes jumelées ou triplées, au sens de l'invention, la largeur axiale des bandes de roulement des pneumatiques équipant un essieu s'entend comme la somme des largeurs axiales de l'ensemble des pneumatiques équipant ledit essieu.

La différence de valeur d'au moins 15 % entre les hauteurs de flanc des pneumatiques équipant l'essieu arrière du véhicule et des pneumatiques équipant l'essieu avant du véhicule, les hauteurs de flancs des pneumatiques équipant l'essieu arrière du véhicule étant supérieures, combinée à des largeurs axiales des bandes de roulement des pneumatiques équipant l'essieu avant du véhicule supérieures ou égales aux largeurs axiales des bandes de roulement des pneumatiques équipant l'essieu arrière du véhicule permettent de contribuer à augmenter la valeur du deuxième élément

$$\left( \delta - \frac{h'.\mu}{2} \right)^2$$

de la relation ou inéquation présentée ci-dessus.

Les études ont mis en évidence que la seule différence d'au moins 15% entre les hauteurs de flanc lorsque les flancs des pneumatiques équipant l'essieu arrière du véhicule sont plus importants n'est pas suffisante pour lutter efficacement en toutes circonstances contre les phénomènes de power hop. En effet, l'augmentation de la valeur du deuxième élément de la relation ou inéquation nécessite alors en outre que les largeurs axiales des bandes de roulement des pneumatiques équipant l'essieu avant du véhicule soient supérieures ou égales aux largeurs axiales des bandes de roulement des pneumatiques équipant l'essieu arrière du véhicule. L'insuffisance de la différence des hauteurs de flanc, prise isolément, peut s'expliquer notamment par la limitation de l'augmentation de la rigidité totale sous l'essieu avant causée par la souplesse du sol non compacté lors du passage des pneumatiques équipant l'essieu avant du véhicule, ledit véhicule circulant en marche avant.

L'augmentation des largeurs axiales des bandes de roulement des pneumatiques équipant l'essieu avant par rapport aux largeurs axiales des bandes de roulement des pneumatiques équipant l'essieu arrière, notamment en comparaison de véhicules usuels, permet d'augmenter la rigidité du sol à l'égard des pneumatiques équipant l'essieu avant du véhicule ; la surface de contact avec le sol desdits pneumatiques augmentant, la rigidité du sol perçue par l'essieu avant du véhicule augmente et contribue à l'augmentation de rigidité totale sous l'essieu avant.

L'invention propose encore avantageusement que l'empattement L du véhicule vérifie la relation : $L > 1.1 \times (m/d)^{1/3}$, d correspondant à une valeur de densité moyenne égale à 300 kg/m$^3$ et m la masse du véhicule, exprimée en kg.

De telles valeurs d'empattement L permettent de contribuer à diminuer la valeur du troisième élément $\left( \dfrac{h'.\mu}{2} \right)^2$ de la relation ou inéquation présentée ci-dessus, la valeur de h' diminuant.

Les études ont mis en évidence que de telles valeurs d'empattement inhabituelles pour des véhicules de type tracteurs favorisent effectivement la disparition des phénomènes de power hop en comparaison avec des tracteurs présentant un empattement plus usuel et mis en roulage dans les mêmes conditions.

Les différents modes de réalisation et/ou variantes de l'invention présentés précédemment sont plus particulièrement adaptés au cas d'un tracteur agricole tractant un outil de travail du sol qui entraîne une forte résistance à l'avancement tel qu'un rotateur à disques.

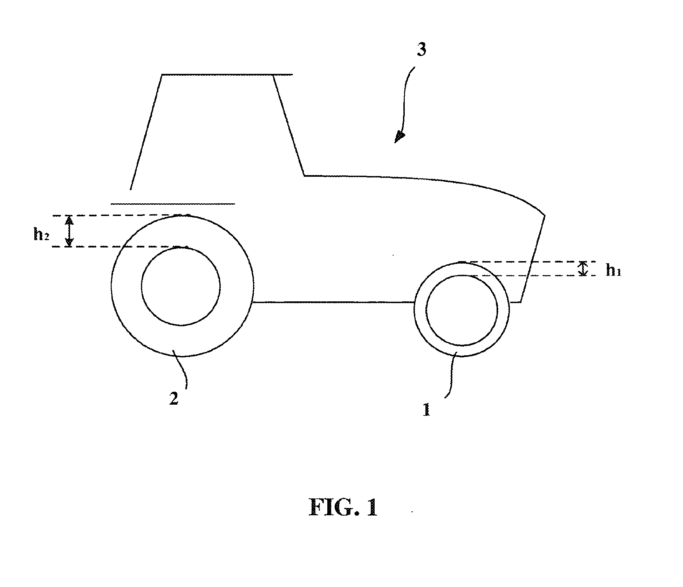

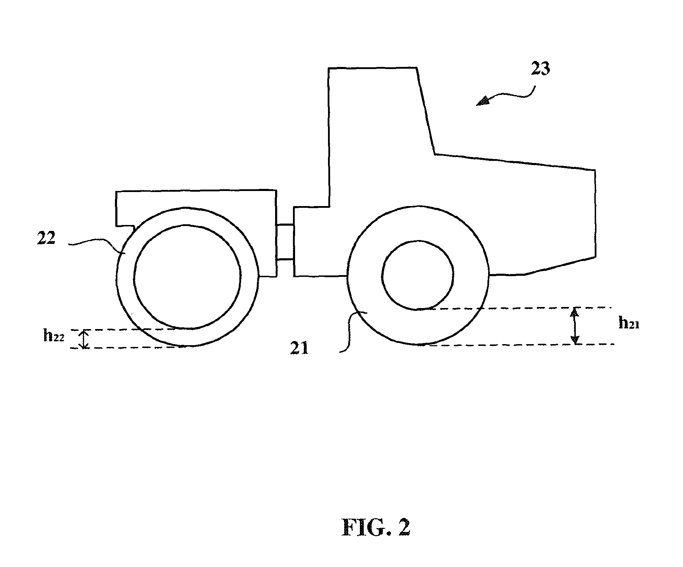

D'autres détails et caractéristiques avantageux de l'invention ressortiront ci-après de la description d'un exemple de réalisation de l'invention en référence aux figures 1 et 2 qui représentent :

- figure 1, une représentation schématique d'un véhicule selon un premier mode de réalisation de l'invention,

- figure 2, une représentation schématique d'un véhicule selon un deuxième mode de réalisation de l'invention.

Les figures ne sont pas représentées à l'échelle pour en simplifier la compréhension.

Sur la figure 1, le véhicule schématisé est un tracteur agricole 3 de type à 4 roues motrices pourvu d'un moteur de puissance 125 kW et de masse à vide égale à 8660 kg. Le tracteur 1 est équipé sur l'essieu avant de pneumatiques 1 de dimension 500/65R34 comportant donc des flancs présentant une hauteur $h_1$ égale à 325 mm (500 × 0.65) et sur l'essieu arrière de pneumatiques 2 de dimension 480/80R46 Agribib comportant donc des flancs présentant une hauteur $h_2$ égale à 384 mm (480 × 0.80).

Les flancs des pneumatiques 2 équipant l'essieu arrière sont donc 18.2 % plus grands que les flancs des pneumatiques 1 équipant l'essieu avant.

Par ailleurs conformément à l'invention, les pneumatiques 1 équipant l'essieu avant présentent une largeur de bande roulement égale à 450 mm, supérieure à la largeur de bande de roulement des pneumatiques 2 équipant l'essieu arrière, elle-même égale 432 mm.

Les essais ont montré qu'un tracteur usuel équipé selon la description de la figure 1 permet de diminuer l'apparition des phénomènes de power hop sur certains types de terrains en comparaison d'un même tracteur de référence équipé de manière plus usuelle de pneumatiques dont les bandes roulement sont plus larges sur l'essieu arrière.

Dans le cas du tracteur équipé de pneumatiques conformément à l'invention et dans le cas du tracteur de référence, le tracteur et l'engin tracté étaient identiques et circulaient sur un sol identique. L'engin tracté était un cultivateur à dents.

Les essais ont été réalisés à différentes pressions de gonflage des pneumatiques, notamment pour balayer les pressions de gonflage constatées chez les agriculteurs et prendre en compte l'ensemble des situations dans lesquelles le phénomène de power hop peut apparaître.

Les essais ont été réalisés sur des chaumes de blé avec un ou deux passages au même endroit pour reproduire des actions réelles d'agriculteur, le deuxième passage visant à finir d'enfouir la végétation indésirable.

Les résultats ont mis en évidence que l'invention permet effectivement de limiter voire éliminer ce phénomène de power hop dans certains cas de figure. En effet, quelles que soient les conditions de roulage, il est apparu que par rapport au tracteur de référence, le tracteur selon l'invention autorise des conditions de confort et de traction acceptables lorsque le tracteur de référence présente soit un confort inacceptable pour le conducteur soit un manque de traction inacceptable du fait du phénomène de power hop.

Les techniques de modélisation ont en outre permis de montrer que des conceptions différentes du tracteur pouvaient encore contribuer à faire disparaître les phénomènes de power hop.

Une première conception a consisté à concentrer les masses du tracteur autour du centre de gravité pour arriver à une valeur de ρ' égale à 0.38. La valeur de ρ' calculée pour le tracteur de la figure 1 est égale à 0.43, la masse du tracteur étant égale à 18321 kg, son inertie égale à 14400 kg.m$^2$ et son empattement égal à 3 m.

Les essais réalisés par modélisation ont montré qu'un tel véhicule, avec une valeur de ρ' égale à 0.38, équipé de pneumatiques conformément à la description de la figure 1 ne présente quasiment plus aucun phénomène de type power hop quel que soit la nature et le type de terrain sur lequel le véhicule circule.

Une deuxième conception a consisté au contraire à éloigner les masses du tracteur de son centre de gravité pour obtenir une valeur de ρ' égale à 0.55.

Les essais réalisés par modélisation ont montré, comme dans le cas de la première conception, qu'un tel véhicule, avec une valeur de ρ' égale à 0.55, équipé de pneumatiques conformément à la description de la figure 1 ne présente quasiment plus aucun phénomène de type power hop quel que soit la nature et le type de terrain sur lequel le véhicule circule.

La figure 2 représente un véhicule 23, dont les pneumatiques 21, 22 présentent les mêmes diamètres extérieurs. Les pneumatiques 21 équipant l'essieu avant sont de dimension 710/70R38 en monte jumelée (4 pneumatiques sur l'essieu) et les pneumatiques 22 équipant l'essieu arrière sont de dimension 710/40R54 en monte jumelée (4 pneumatiques sur l'essieu).

Les flancs des pneumatiques 21 équipant l'essieu avant présentent une hauteur $h_{21}$ égale à 497 mm (710 $\times$ 0.70) et les flancs des pneumatiques 22 équipant l'essieu arrière présentent une hauteur $h_{22}$ égale à 284 mm (710 $\times$ 0.40).

Les flancs des pneumatiques 22 équipant l'essieu arrière sont donc 43 % plus petits que les flancs des pneumatiques 21 équipant l'essieu avant.

Les essais réalisés, semblables à ceux décrits en référence à la figure 1, avec un véhicule comportant des pneumatiques présentant tous des diamètres extérieurs identiques et conformes à la description de la figure 2 ont montré une diminution de l'apparition des phénomènes de power hop sur certains types de terrains en comparaison d'un même véhicule équipé de manière plus usuelle de pneumatiques totalement identiques.

Les techniques de modélisation ont en outre permis de montrer que des conceptions différentes du véhicule semblables aux deux conceptions présentées en référence à la figure 1 pouvaient encore contribuer à faire disparaître les phénomènes de power hop pour un véhicule tel que décrit dans le cas de la figure 2, quel que soit le type de terrain.

## Revendications

1. Véhicule lourd comportant au moins quatre ensembles montés, constitués chacun d'une roue et d'un pneumatique, destiné à tracter un engin, **caractérisé en ce que** les propriétés du véhicule vérifient la relation :

$$\left(\rho' - \sqrt{\kappa.(1-\kappa)}\right)^2 + \left(\delta - \frac{h'.\mu}{2}\right)^2 > \left(\frac{h'.\mu}{2}\right)^2,$$

   avec,

   $\rho' = \rho/L$, $\rho$ étant le rayon de giration du véhicule et $L$ étant l'empattement du véhicule,

   $\kappa$, la proportion de la rigidité verticale totale sous l'essieu avant par rapport à la somme des rigidités verticales totales sous les essieux avant et arrière du véhicule,

   $\delta$, le rapport entre le décalage du centre de gravité vers l'avant et l'empattement,

   $h'$, le rapport entre la hauteur de la ligne de traction par rapport à un sol formant un plan horizontal et l'empattement du véhicule,

   $\mu$, le rapport entre la composante longitudinale de la force de résistance appliquée par l'engin tracté sur le véhicule, et le poids du véhicule.

2. Véhicule lourd selon la revendication 1, **caractérisé en ce que** $\rho'$ vérifie la relation :

$$\rho' > 0.525.$$

3. Véhicule lourd selon la revendication 1, **caractérisé en ce que** $\rho'$ vérifie la relation :

$$\rho' < 0.395.$$

4. Véhicule lourd selon l'une des revendications 1 à 3, **caractérisé en ce que** la hauteur de flanc des pneumatiques équipant l'essieu arrière du véhicule est inférieure d'au moins 15% à la hauteur de flanc des pneumatiques équipant l'essieu avant du véhicule.

5. Véhicule lourd selon la revendication 4, **caractérisé en ce que** le diamètre extérieur des pneumatiques équipant l'essieu arrière du véhicule est identique au diamètre extérieur des pneumatiques équipant l'essieu avant du véhicule.

6. Véhicule lourd selon la revendication 4, **caractérisé en ce que** le diamètre extérieur des pneumatiques équipant l'essieu arrière du véhicule est inférieur au diamètre extérieur des pneumatiques équipant l'essieu avant du véhicule.

7. Véhicule lourd selon l'une des revendications 1 à 3, **caractérisé en ce que** la hauteur de flanc des pneumatiques équipant l'essieu arrière du véhicule est supérieure d'au moins 15% à la hauteur de flanc des pneumatiques équipant l'essieu avant du véhicule et **en ce que** la largeur axiale des bandes de roulement des pneumatiques équipant l'essieu avant du véhicule est au moins égale à la largeur axiale des bandes de roulement des pneumatiques équipant l'essieu arrière du véhicule.

8. Véhicule lourd selon l'une des revendications précédentes, **caractérisé en ce que** l'empattement L du véhicule vérifie la relation :

$$L > 1.1 \times (m/d)^{1/3},$$

avec,
m, la masse du véhicule, exprimée en kg.
d, une densité moyenne égale à $300kg/m^3$

9. Véhicule lourd selon l'une des revendications précédentes, **caractérisé en ce que** le véhicule lourd est un tracteur agricole et **en ce que** l'engin tracté est un outil de travail du sol.

**Claims**

1. Heavy vehicle comprising at least four mounted assemblies, each one consisting of a wheel and a tyre, intended to draw machinery, **characterized in that** the properties of the vehicle satisfy the relationship:

$$\left(\rho' - \sqrt{\kappa.(1-\kappa)}\right)^2 + \left(\delta - \frac{h'.\mu}{2}\right)^2 > \left(\frac{h'.\mu}{2}\right)^2,$$

where,
$\rho' = \rho/L$, $\rho$ being the turning radius of the vehicle and L being the wheelbase of the vehicle,
$\kappa$ is the proportion of the total vertical stiffness under the front axle with respect to the sum of the total vertical stiffnesses under the front and rear axles of the vehicle,
$\delta$ is the ratio between the forward offset of the centre of gravity and the wheelbase,
$h'$ is the ratio between the height of the draft line above the level of ground that forms a horizontal plane and the wheelbase of the vehicle,
$\mu$ is the ratio between the longitudinal component of the resistive force applied by the drawn machinery to the vehicle, and the weight of the vehicle.

2. Heavy vehicle according to Claim 1, **characterized in that** $\rho'$ satisfies the relationship:

$$\rho' > 0.525.$$

3. Heavy vehicle according to Claim 1, **characterized in that** $\rho'$ satisfies the relationship:

$$\rho' < 0.395.$$

4. Heavy vehicle according to one of Claims 1 to 3, **characterized in that** the height of the sidewalls of the tyres fitted to the rear axle of the vehicle is at least 15% smaller than the height of the sidewalls of the tyres fitted to the front axle of the vehicle.

5. Heavy vehicle according to Claim 4, **characterized in that** the outside diameter of the tyres fitted to the rear axle of the vehicle is the same as the outside diameter of the tyres fitted to the front axle of the vehicle.

6. Heavy vehicle according to Claim 4, **characterized in that** the outside diameter of the tyres fitted to the rear axle of the vehicle is smaller than the outside diameter of the tyres fitted to the front axle of the vehicle.

7. Heavy vehicle according to one of Claims 1 to 3, **characterized in that** the height of the sidewalls of the tyres fitted to the rear axle of the vehicle is at least 15% greater than the height of the sidewalls of the tyres fitted to the front axle of the vehicle, and **in that** the axial width of the treads of the tyres fitted to the front axle of the vehicle is at least equal to the axial width of the treads of the tyres fitted to the rear axle of the vehicle.

8. Heavy vehicle according to one of the preceding claims, **characterized in that** the wheelbase L of the vehicle satisfies the relationship:

$$L > 1.1 \times (m/d)^{1/3},$$

where,
m is the mass of the vehicle expressed in kg,
d is an average density equal to 300 kg/m$^3$.

9. Heavy vehicle according to one of the preceding claims, **characterized in that** the heavy vehicle is an agricultural tractor and **in that** the drawn machinery is an implement for working the land.

**Patentansprüche**

1. Schwerfahrzeug, das mindestens vier montierte Einheiten aufweist, die je aus einem Rad und einem Luftreifen bestehen, und dazu bestimmt ist, ein Gerät zu ziehen, **dadurch gekennzeichnet, dass** die Eigenschaften des Fahrzeugs die folgende Beziehung erfüllen:

$$\left(\rho' - \sqrt{\kappa.(1-\kappa)}\right)^2 + \left(\delta - \frac{h'.\mu}{2}\right)^2 > \left(\frac{h'.\mu}{2}\right)^2,$$

mit
p'=p/L, wobei ρ der Wenderadius des Fahrzeugs und L der Radstand des Fahrzeugs ist,
κ dem Anteil der senkrechten Gesamtsteifigkeit unter der Vorderachse bezüglich der Summe der senkrechten Gesamtsteifigkeiten unter den Vorder-und Hinterachsen des Fahrzeugs,
δ dem Verhältnis zwischen der Verschiebung des Schwerpunkts nach vorne und dem Radstand,
h' dem Verhältnis zwischen der Höhe der Zuglinie bezüglich eines Bodens, der eine waagrechte Ebene bildet, und dem Radstand des Fahrzeugs,
μ dem Verhältnis zwischen der Längskomponente der vom gezogenen Gerät auf das Fahrzeug ausgeübten Widerstandskraft und dem Gewicht des Fahrzeugs.

2. Schwerfahrzeug nach Anspruch 1, **dadurch gekennzeichnet, dass** ρ' die folgende Beziehung erfüllt:

$$\rho' > 0.525.$$

3. Schwerfahrzeug nach Anspruch 1, **dadurch gekennzeichnet, dass** ρ' die folgende Beziehung erfüllt:

$$\rho' < 0.395.$$

4. Schwerfahrzeug nach einem der Ansprüche 1 bis 3, **dadurch gekennzeichnet, dass** die Flankenhöhe der die Hinterachse des Fahrzeugs bestückenden Luftreifen um mindestens 15% geringer als die Flankenhöhe der die Vorderachse des Fahrzeugs bestückenden Luftreifen ist.

5. Schwerfahrzeug nach Anspruch 4, **dadurch gekennzeichnet, dass** der Außendurchmesser der die Hinterachse des Fahrzeugs bestückenden Luftreifen gleich dem Außendurchmesser der die Vorderachse des Fahrzeugs bestückenden Luftreifen ist.

6. Schwerfahrzeug nach Anspruch 4, **dadurch gekennzeichnet, dass** der Außendurchmesser der die Hinterachse des Fahrzeugs bestückenden Luftreifen geringer als der Außendurchmesser der die Vorderachse des Fahrzeugs bestückenden Luftreifen ist.

7. Schwerfahrzeug nach einem der Ansprüche 1 bis 3, **dadurch gekennzeichnet, dass** die Flankenhöhe der die Hinterachse des Fahrzeugs bestückenden Luftreifen um mindestens 15% höher ist als die Flankenhöhe der die Vorderachse des Fahrzeugs bestückenden Luftreifen, und dass die axiale Breite der Laufstreifen der die Vorderachse des Fahrzeugs bestückenden Luftreifen mindestens gleich der axialen Breite der Laufstreifen der die Hinterachse des Fahrzeugs bestückenden Luftreifen ist.

8. Schwerfahrzeug nach einem der vorhergehenden Ansprüche, **dadurch gekennzeichnet, dass** der Radstand L des Fahrzeugs die folgende Beziehung erfüllt

$$L > 1.1 \times (m/d)^{1/3},$$

mit
m der Masse des Fahrzeugs, ausgedrückt in kg,
d einer mittleren Dichte gleich 300 kg/m$^3$.

9. Schwerfahrzeug nach einem der vorhergehenden Ansprüche, **dadurch gekennzeichnet, dass** das Schwerfahrzeug eine landwirtschaftliche Zugmaschine und das gezogene Gerät ein Bodenbearbeitungswerkzeug ist.

**FIG. 1**

**FIG. 2**

**RÉFÉRENCES CITÉES DANS LA DESCRIPTION**

**Documents brevets cités dans la description**

- FR 1046427
- US 3108628 A
- FR 1259199
- US 6260873 B
- US 20050269796 A